# EUROPEAN PATENT APPLICATION

(11) **EP 1 109 106 A1**
(43) Date of publication of application: **20.06.2001**
(21) Application number: 99124954.1
(22) Date of filing: 14.12.1999
(51) Int. Cl.: G06F 17/21

(54) **Reference data base**

(71) Applicant: SUN MICROSYSTEMS, INC., Palo Alto, California 94303 (US)
(72) Inventor: Pingel, Jürgen, 21502 Geesthacht (DE); Specht, Oliver, 22113 Oststeinbek (DE); Loehmann, Frank, 22846 Norderstedt (DE); Hoeger, Lutz, 20253 Hamburg (DE)
(74) Representative: Betten & Resch

(57) **Abstract**

A reference data base containing, for example, bibliographic data related to a computer readable document lika a text document is stored together with the document in a single data file. The reference data are therefore always accessible for the user of the document.

## Description

### FIELD OF THE INVENTION

The invention relates to the management of reference data like bibliographic data relating to a computer readable document as e.g. a text document.

### DESCRIPTION OF THE RELATED ART

Some types of text documents, in particular scientific papers or the like contain a large amount of reference data like bibliographic data, footnotes, hyperlinks etc. With some text documents inputting, handling and editing the reference data consists of a large portion of the time and work needed to create the text document. In some cases the handling of e.g. bibliographic data is even more time consuming than generating the text data itself.

With word processing application programs it is known to insert bibliographic data of every reference document or footnote by typing every reference separately. The bibliographic data are then treated and stored by the word processing program as text data having a different character font and format. Most word processing programs are able to correctly handle the position and order of the bibliographic data when the text data are edited. The writing and editing of the bibliographic data, however, is awkward and time consuming.

Therefore it was proposed to create a separate data base for bibliographic data. When a new reference is inserted in the text document a reference field points to a respective entry in the data base. With such a separate data base writing and editing the bibliographic data is facilitated, in particular if references are cited several times in the same document. Moreover, the format of the citations can be determined centrally in the data base and need not to be input separately for every new citation.

If the text document is copied to a different storage medium, for example the disk memory of a laptop computer, however, the problem arises that the bibliographic data base, which is stored as a separate data file is not available on the storage medium, on which the text document has been copied. So the user of the laptop computer is able to edit the text data, but not the bibliographic data.

It is therefore an object of the present invention to improve the management of reference data associated with a document.

### SUMMARY OF THE INVENTION

In accordance with the present invention the above problem has been solved by a method of creating a reference data base for a computer readable document, comprising the steps of entering inputted reference data into the data base, and storing the reference data base with the document in a single data file.

Since the document file contains e.g. the text data and the reference data in a single file the user can always edit the text data as well as the reference data, and only one document needs to be transferred to another storage medium or remote device.

The reference data base contains fields for different types of data sources. These data sources include, for example in the case of a bibliographic data base, books, journals, conference papers, web-pages, e-mails, etc. For every type of data source there are fields for inputting specific information relating to this particular data source. The data base may comprise one field with information about how often a specific reference is cited in the text document.

Preferably the reference data is input using an interactive dialogue window displayed on a display screen. This allows a simple entry of the bibliographic data by the user. The reference data, however, may also be imported from or synchronized with an external data source over e.g. the internet.

As a further implementation of the invention there is provided an apparatus for creating a reference data base for a computer readable document, comprising a unit for entering inputted reference data into the data base, and means for storing the reference data base together with the document in a single data file on a storage medium.

As a still further implementation of the present invention there is provided a storage medium having stored thereon in a single data file a computer readable document and a reference data base relating to the document. As still further implementation of the present invention there is provided an information signal encoding a computer readable data file including a document and a reference data base related to the document.

As a still further implementation of the present invention there is provided a computer program for creating a reference data base for a computer readable document, the computer program comprising program code adapted for entering inputted reference data into the data base, and storing the reference data base together with the document in a single data file.

A program code may be embodied in any form of a computer program product. A computer program product comprises a medium configured to store or transport computer readable code, or in which computer readable code may be embedded. Some example of computer program products are CD-ROM discs, ROM cards, floppy discs, magnetic tapes, computer hard drives, servers on a network and signals transmitted over a network representing computer readable program code.

The great advantage and utility of the present invention is that one single document also contains the reference information, which can be edited by the user. This is in particular advantageous when the text document is large and contains a large volume of bibliographic data and if more than one author, e.g. on remote locations, work on the same text document. Moreover, the reference data can easily be exchanged or synchronized with local or external data bases, for example via the internet.

The above mentioned and other features, utilities and advantages of the present invention will be apparent from the following detailed description of preferred embodiments of the invention in connection with the accompanied drawings.

### BRIEF DESCRIPTION OF THE DRAWINGS

Figure 1A is a flow chart illustrating the generation of a reference data base of a text document containing bibliographic data according to the present invention.

Figure 1B is a flow chart illustrating the editing operation of text and bibliographic data according to the present invention.

Figure 2 is a schematic illustration of a computer system for carrying out the present invention.

Figure 3 is a schematic illustration of a text document according to the invention containing reference fields.

Figure 4 is a schematic illustration of a table containing bibliographic data of the reference data base according to the present invention.

Figure 5 is an illustration of the user dialogue display window for inputting and/or editing a bibliographic data according to the present invention.

Figure 6 is a schematic representation of a text document file according to the present invention.

Figure 7 is a schematic illustration of a client-server configuration to which the present invention may be applied.

Figure 8 is a flow chart illustrating the process of synchronizing the document data base with another data source.

### DETAILED DESCRIPTION OF PREFERRED EMBODIMENTS

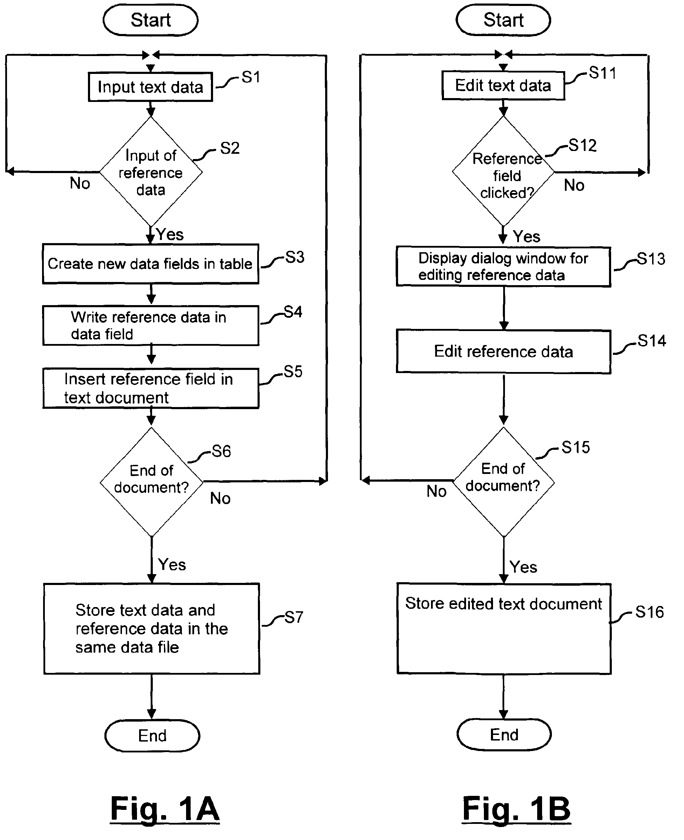

The flow chart of Figure 1A illustrates a preferred embodiment of a method for creating a reference data base of a computer readable document consistent with the present invention. The document contains at least text data and references to a reference data, but it is understood that it can also contain further data as graphics, tables, user defined fields and so on. The document may, for example, be an HTML- or XML-document.

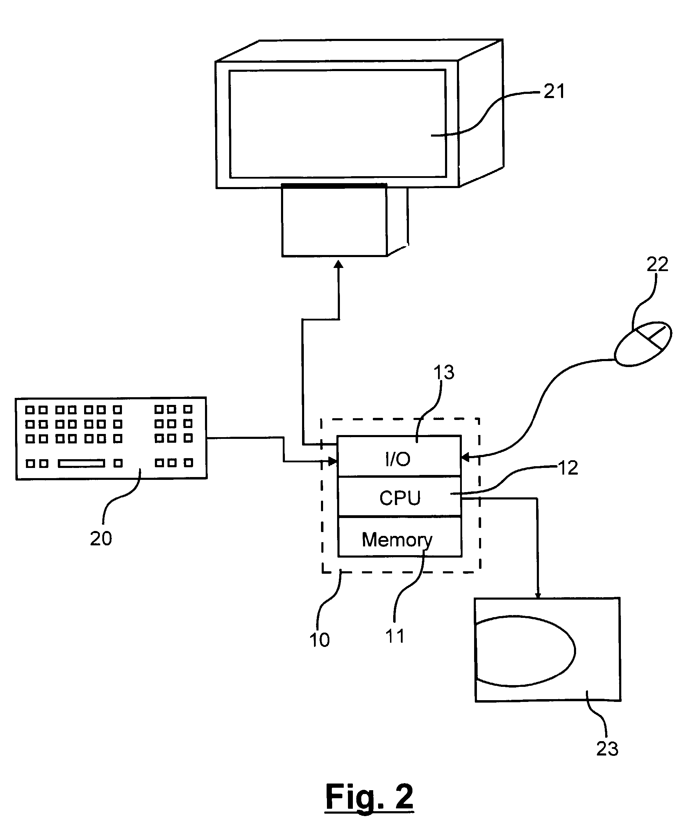

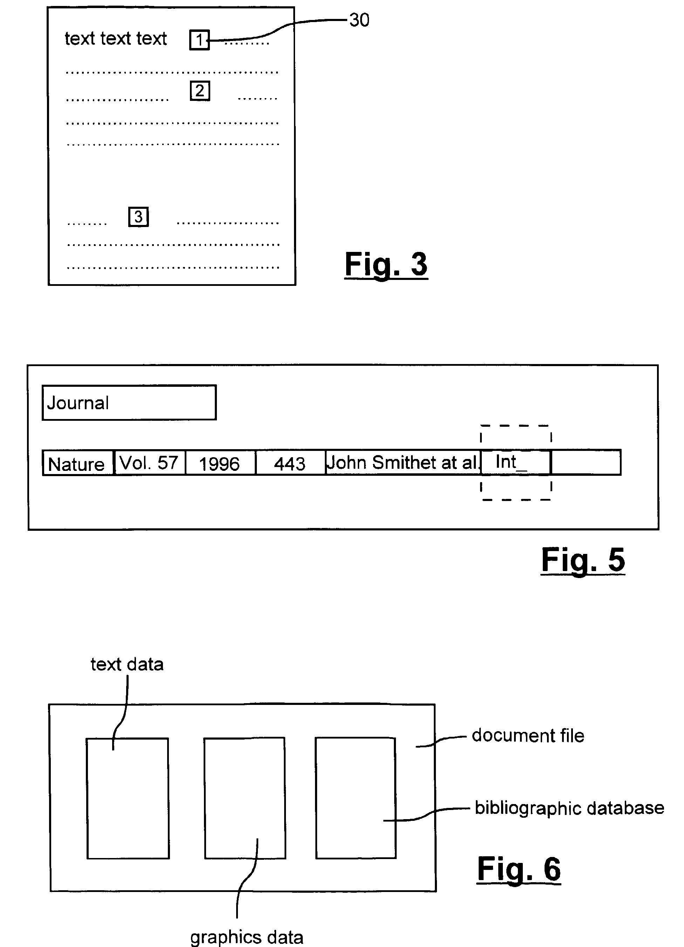

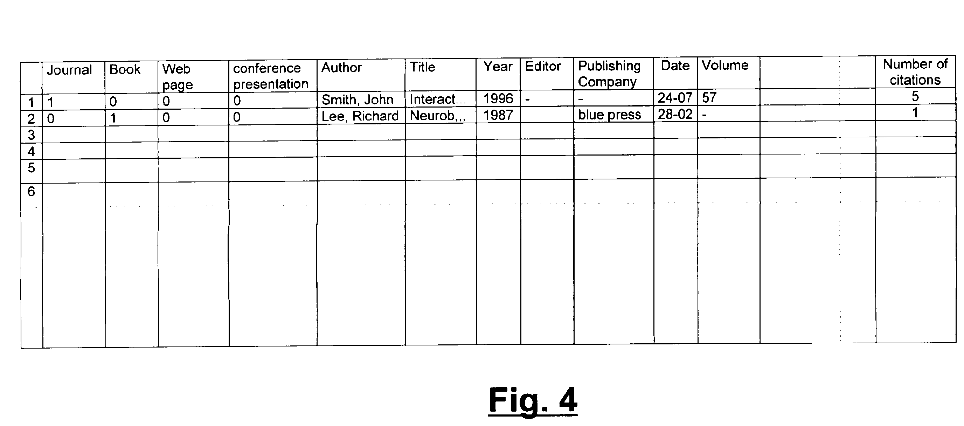

In step S1 the user inputs text data using, for example, a keyboard 20 as is illustrated in Figure 2. The text data, however, can be input by any other means, e.g. voice processing or the like. In step S2 the computer program awaits an instruction whether or not it is desired to input reference data, for example bibliographic data. If not, the program returns to step S1 allowing the user to input further text data. If the result in step S2 is yes, a new data field in the bibliographic data base table, which will be described in detail with reference to Figure 4 below, is created. The bibliographic data are then written in step S4 into the newly created data field, preferably using a user interactive dialogue window as illustrated in Figure 5. The user can therefore easily input the bibliographic data without taking care of the format, which can be determined by a separate dialogue window (not shown). A reference field 30 is then inserted into the text document at the position the user wants to have the bibliographic citation, as is illustrated in Figure 3. In step S6 the program checks whether or not the end of the document is reached. If not, the program goes back to step S1. If the end of the document is reached, the program stores in step S7 the text data and the bibliographic data base in the same data file on a given storage medium, for example, a hard disc of a computer, CD-ROM or remote storage medium via the internet. After the storage operation the creation of the text document according to the present invention is completed.

A document file created according to the invention is schematically shown in Figure 6. The document file contains the data including the reference fields, the reference data base and also contains further data as for example graphics data. The reference data base may contain any sort of related data as bibliographic data, related graphics, headword index, etc.

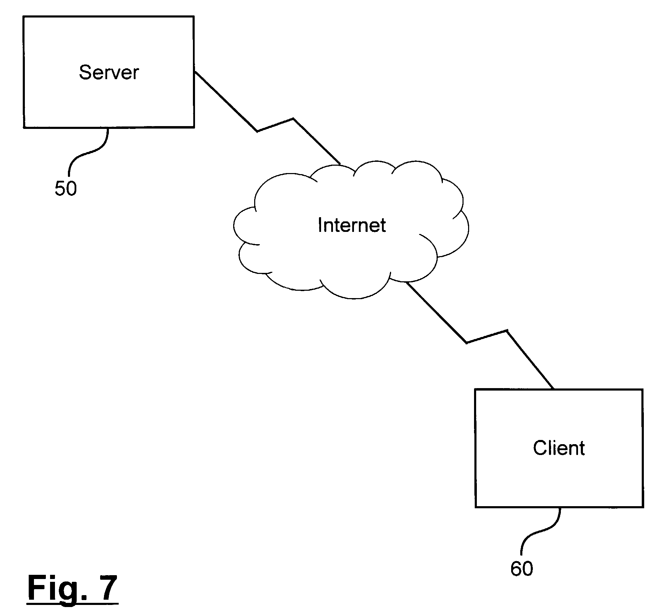

Figure 2 shows the main elements of a general purpose computer. The main unit 10 of the computer comprises a central processing unit CPU 12, a memory such as hard disc 11 and an input output unit I/O 13. With the main unit there are connected input devices like a keyboard 20 or a mouse 22. Other input devices as a speech decoder are of course also possible. As output device there is provided a display monitor 21. The document according to the invention can be stored on the internal memory 11, an external memory 23 as for example a CD-ROM or on a remote memory via a computer network like the internet. The invention of course is not restricted to the application on a PC or a workstation, but can also be carried out on a so called internet appliance. The invention, however, may also be applied to a client-server configuration as illustrated in Figure 7. The documents may be displayed on a display screen of a client device 60 while a number or all steps of the method as described herein are carried out on a server computer 50 accessible by the client device 60 over a data network as the internet using a browser application or the like.

Figure 4 shows an example of the table structure of the reference information stored in the reference data base. For every item of, e.g. bibliographic data, that is for every citation there is provided one row in the table. In the illustration of Figure 4 the first four fields of a row contain bits indicating the type of the data source, for example journal, book, web-page or conference presentation. The types of data sources, however, are not restricted to these four. Item 1 of the bibliographic data in the example of Figure 4 is an article in a journal; therefore a bit 1 is set in the journal field. Then fields for the author, the title, the year, the editor, etc. follow. In the last field the number of citations of the article in the text document is given. If the user wishes to enter a new item into the bibliographic data using a user interactive dialogue window as shown in Figure 5, he or she can select the desired type of data source which is then displayed in the dialogue window, in the example shown in the Figure 5 "Journal". Then only those fields of the table shown in Figure 4 are displayed in the dialogue window, which relate to the document type "Journal", as is illustrated in Figure 5. The user can then easily enter the bibliographic information. If he or she cites the same article again, he need not enter the bibliographic data once more. The bibliographic data, however, can also be entered or updated from an external data base. It should be acknowledged here that the invention is not limited to any specific type of document or reference data base.

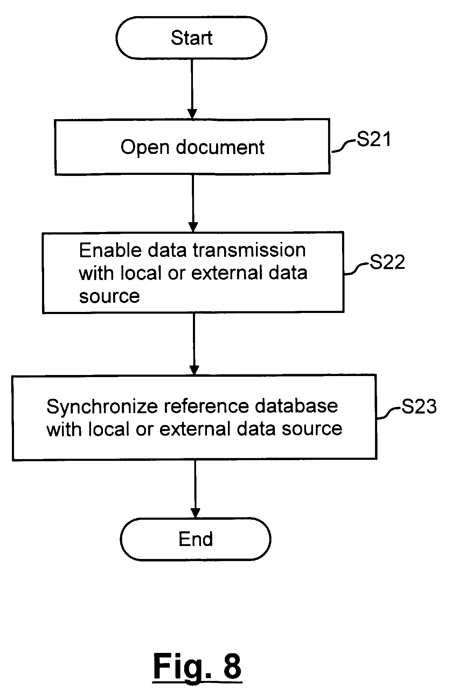

Since the text data and the reference data is stored in the same text document file transferral of this single document file to a different location is sufficient to enable a user at that different location to edit the text data as well as the bibliographic data. The editing operation according to the present invention is illustrated in Figure 1B. In step S11 the text document is edited using suitable input devices. If a reference field 30 is addressed by a key or a mouse click ("yes" in step S12), the dialogue window for editing bibliographic data as shown in Figure 5 is opened in step S13. The bibliographic data can then be edited in step S14. If the end of the document is reached in step S15, the edited text document is then stored in a single file. The text document file then contains the updated text data as well as the updated bibliographic data. A further preferred feature of the present invention is now described in connection with the flow chart of Figure 8. The user may open the document comprising the reference data base in a step S21. Then, in step S22, a data transmission with a local data source as for example a data base on a computer or a remote data source as for example a data base on an internet server is enabled by providing a data transmission link. It is then possible to exchange the data between the external data source and the data base in the document. Preferably the document data base contains a bibliographic data in an internet compatible format as for example the Z95 standard. With the synchronization operation either the document data base may be updated or completed or the external data source located on a remote device. According to this preferred embodiment possibilities for updating and completing the document data base as for example a bibliographic date base are greatly improved.

While the invention has been particularly shown with reference to a preferred embodiment thereof, it will be understood by those skilled in the art that various other changes in the form and details may be made therein without departing from the spirit and scope of the invention.

## Claims

1. A method of creating a reference data base for a computer readable document, comprising the steps of;
entering inputted reference data into the data base, and
storing the reference data base with the document in a single data file.

2. The method of claim 1, wherein the document comprises reference fields (30) for retrieving the reference data stored in the data base.

3. The method of claim 1
wherein the reference data base contains fields for different types of reference data sources and fields containing specific information associated with these data sources.

4. The method of claim 3,
wherein the reference data contains bibliographic information and the data sources include books, journals, conference presentations, web-pages and e-mails.

5. The method of claim 4,
wherein the data base comprises one field containing information about the number of citations of a reference in the document.

6. The method of claim 1,
further comprising the step of providing information signals for displaying a user interactive dialogue window for inputting reference data on a display screen (21).

7. The method of claim 1,
comprising the step of synchronizing the reference data base with other data sources.

8. An apparatus for creating a reference data base for a computer readable document, comprising;
a unit (10) for entering inputted reference data into the data base, and
a unit (12) for storing the reference data base together with the document in a single data file on a storage medium (11, 23).

9. A storage medium (23) having stored thereon in a single data file a computer readable document and a reference data base relating to the document.

10. The storage medium (23) of claim 9 wherein the document contains reference fields (30) for retrieving the reference data.

11. The storage medium of claim 9,
wherein the reference data base contains fields for different types of reference data sources and fields containing specific information associated with these data sources.

12. A computer program for creating a reference data base for a computer readable document, the computer program comprising program code adapted for:
entering inputted reference data into the data base, and
storing the reference data base together with the document in a single data file.

13. The computer program of claim 12, wherein the document comprises reference fields (30) for retrieving the reference data stored in the data base.

14. The computer program of claim 12,
wherein the reference data base contains fields for different types of reference data sources and fields containing specific information associated with these data sources.

15. The computer program of claim 14,
wherein the reference data base contains bibliographic information and the data sources include books, journals, conference presentations, web-pages and e-mails.

16. The computer program of claim 15,
wherein the data base comprises one field containing information about the number of citations of a reference in the document.

17. The computer program of claim 12,
further comprising instructions for displaying a user interactive dialogue window on a display screen (21) for inputting reference data.

18. The computer program of claim 12,
comprising computer code allowing synchronization of the reference data base with other data sources.

19. A computer program product for creating a reference data base for a computer readable document, the computer program comprising program code adapted for:
entering inputted reference data into the data base, and
storing the reference data base together with the document in a single data file.

20. The computer program product of claim 19, wherein reference fields (30) are included in the text data for retrieving the reference data stored in the reference data base.

21. The computer program product of claim 19, further comprising program code allowing synchronization of the reference data base with other data sources.

22. An information signal encoding a computer readable data file including a document and a reference data base related to the document.
